# EUROPEAN PATENT SPECIFICATION

(11) **EP 2 183 691 B1**
(45) Date of publication and mention of the grant of the patent: **30.01.2019**
(21) Application number: 07811798.3
(22) Date of filing: 23.08.2007
(51) Int. Cl.: F02D 41/10, F02D 23/02, B60W 10/06, B60W 10/10, B60W 30/188

(54) **METHOD AND SYSTEM FOR CALCULATING OUTPUT TORQUE PRODUCED BY A TURBOCHARGED ENGINE**
VERFAHREN UND SYSTEM ZUM BERECHNEN DES DURCH EINEN MOTOR MIT TURBOLADER PRODUZIERTEN AUSGANGSDREHMOMENTS
PROCÉDÉ ET SYSTÈME POUR CALCULER UN COUPLE DE SORTIE PRODUIT PAR UN MOTEUR À TURBOCOMPRESSEUR

(43) Date of publication of application: 12.05.2010
(73) Proprietor: International Engine Intellectual Company LLC, Warrenville, IL 60555 (US)
(72) Inventor: RODRIGUEZ, Rogelio, Plainfield, IL 60544 (US); LACK, Adam, Willow Springs, IL 60480 (US)
(74) Representative: Kuhnen & Wacker Patent- und Rechtsanwaltsbüro PartG mbB
(86) International application number: PCT/US2007/061744
(87) International publication number: WO 2009/025656

(56) References cited:
- EP-A2- 1 384 875
- US-A- 6 016 459
- US-A- 6 016 459
- US-A1- 2006 142 929
- US-B1- 6 651 432
- US-B2- 7 047 741

## Description

This invention relates to turbocharged engines and particularly to a method and system for calculating brake torque produced by a turbocharged diesel engine.

### Background of the Invention

Electronic control systems associated with motor vehicle powertrains utilize certain data for performing control functions. Some data that is processed by control algorithms to develop control data is obtained directly from sensors while other data used by control algorithms is developed by processing certain data according to various other algorithms. Because driving conditions frequently change during typical trips made by a motor vehicle, data that is used by control algorithms must be updated with sufficient regularity to accurately reflect changes, and processing performed by an electronic control system must be fast enough to keep pace with changing conditions in order to assure optimal vehicle performance. Transients in engine/powertrain operation are especially challenging for control systems.

Because of particular dynamics of particular engine/powertrain components and/or the manner in which data for, or related to, them is developed, certain data that is important for optimal vehicle performance may not track operational changes, especially transients, with sufficient timeliness for optimal vehicle performance as those changes are occurring.

For example, shifting of an automatic transmission may be controlled by the amount of engine brake torque being produced by an internal combustion
engine. When control of transmission shifting is electronic in nature, a processing system must develop accurate engine brake torque data for use by an automatic transmission controller to assure shifting at the proper time. Because shifting occurs as a consequence of the vehicle being accelerated or decelerated, the powertrain is in a dynamic state, and so is data related to it.

From EP 1 384 875 A2 a fuel control apparatus as well as a method of controlling the fuel of an engine is known which shall prevent the air-fuel ratio from being rich during acceleration and prevent a torque variation generated in switching between stoichiometric driving and lean driving which are generated due to a turbo lag. In the method the engine speed, a supercharging pressure based turbo lag index, as well as external requirement torque among others are processed in a target torque computing means in order to calculate the target fuel quantity and a target air quantity.

A known processing strategy for calculating engine brake torque data during transient operation, such as during engine acceleration, uses engine rotational inertia data and engine speed change (acceleration) data to compensate basic torque data that is being calculated according to what is essentially a steady-state algorithm. While the iteration rate of the steady-state algorithm, in conjunction with compensation for acceleration transients, might seem sufficiently fast to yield accurate brake torque data as the engine speed changes, various factors, such as component dynamics, affect accuracy and lead to the need for even better transient compensation.

One of the present inventor's prior patents, US 6,584,391, relates to a system and method for engine torque calculation. The algorithm that is embodied in that system and method calculates gross engine torque by processing engine speed and fueling data. Net torque, i.e. brake torque, is calculated by calculating torque losses and subtracting those losses from calculated gross torque.

One component of torque loss is engine pumping loss, which is a function of different factors that include intake manifold pressure and exhaust backpressure. When the engine accelerates, an engine speed derivative term calculation contributes to transient compensation for engine torque.

In certain motor vehicles having turbocharged engines and automatic transmissions whose shift points are electronically controlled, it has been observed that shift quality may be affected by the nature of certain turbochargers, such as certain two-stage turbochargers. Through recognition that the quality of transmission shifts is attributable to the effect of such turbochargers on the prior method for brake torque calculation, the inventors have created a novel and improved strategy for calculating engine brake torque.

### Summary of the Invention

Accordingly, the present invention provides a novel strategy that can more accurately calculate changing engine brake torque in a turbocharged engine as the change is occurring. This is especially advantageous for controlling a motor vehicle powertrain that has an automatic transmission whose shift points are electronically controlled by calculated engine brake torque.

Briefly, the present invention relates to a method for calculating engine brake torque as an engine accelerates under load using an intake manifold pressure model and actual engine boost. The model correlates steady-state boost with various combinations of engine speed and engine load based on steady-state engine operation. As the engine accelerates, engine speed and an estimate of engine torque are repeatedly processed to cause a data value for boost to be selected from a map that has been populated for the various combinations of speed and load. Intake manifold pressure representing actual boost is obtained in any suitably appropriate way.

The estimated torque results from processing certain data according to an algorithm that possesses some inaccuracy due to some disparity between the data value for actual boost during acceleration and the data value selected from the map.

The processing continues by calculating discrepancy between actual boost and boost indicated by the model using current engine speed and current estimated torque.

The discrepancy is then used in conjunction with the estimated torque to provide calculated torque that has been proven to more closely track actual torque during engine acceleration under load than does the estimated torque. In particular, data values for current estimated torque and current boost discrepancy are processed to select a data value for calculated torque from a second map that has been populated with torque data values correlated with various combinations of boost discrepancy and torque as a result of further engine development testing.

It is the data value for calculated torque from the second map that tracks actual torque during engine acceleration under load more closely than the estimated torque.

While general principles of the invention are not limited to any particular type of turbocharger, the invention is considered especially useful when the engine has a two-stage turbocharger. The invention can benefit a turbocharged engine by taking into account turbo lag, altitude, and ambient temperature. It can accommodate calibration changes and compensate for various factors such as engine wear, manifold leaks, tolerances, and even certain types of failures.

Accordingly, one generic aspect of the present invention relates to a method for calculating torque being produced by a turbocharged internal combustion engine during acceleration under load by processing a data value for actual boost and a data value for boost selected from a boost map that contains data values for boost, each of which represents boost that would prevail during steady state engine operation at a respective speed with the engine developing a respective torque and each of which is correlated with a respective set of data values for engine speed and torque.

The selection is made using a data value for engine speed and a data value for estimated torque that possesses some inaccuracy due to some disparity between the data value for actual boost and the data value selected from the map. The selection yields a boost disparity data value representing disparity between the data value for actual boost and the data value for boost selected from the map.

The boost disparity data value and the data value for estimated torque are processed to select from a torque map that contains data values for indicated torque, each of which is correlated with a respective set of data values for boost disparity and torque, a data value for calculated torque correlated with the boost disparity data value and the data value for estimated torque.

It is the calculated torque from the torque map that provides a better correlation with actual torque than does the estimated torque during acceleration.

Another generic aspect relates to an engine system including a processor that embodies the foregoing method.

Still another generic aspect relates to a processing system for use in association with a turbocharged internal combustion engine. The processing system comprises a processor for executing data processing algorithms, one of which selects data values from first and second maps.

The first map contains data values for boost each of which is developed during steady state engine operation at a respective speed while the engine is developing a respective torque and each of which is arranged in the map in correlation with a respective set of data values for engine speed and torque.

The second map contains data values providing for correction of a data value for estimated torque that possesses some inaccuracy due to some disparity between a data value for actual boost and a data value for boost selected from the first map. Each data value in the second map is arranged in correlation with a respective set of data values for discrepancy between the data value for actual boost and the data value from the first map.

When the processor executes the one algorithm, a data value from the first map correlated with data values for engine speed and estimated torque is selected, The data value for actual boost and the data value selected from the first map are processed to obtain a data value representing discrepancy between the two, and it is processed along with a data value for estimated torque to select the corresponding data value from the second map.

In a preferred embodiment, the data values in the second map are calculated torque values. They could however be correction factors that are processed with a torque value needing correction, such as estimated torque, to develop more accurate calculated torque.

The foregoing, along with further features and advantages of the invention, will be seen in the following disclosure of a presently preferred embodiment of the invention depicting the best mode contemplated at this time for carrying out the invention. This specification includes drawings, now briefly described as follows.

### Brief Description of the Drawings

Figure 1 is a diagram of a motor vehicle that comprises an engine system embodying principles of the invention.
Figure 2 is a schematic strategy diagram illustrative of principles of the invention that are embodied in the engine system and that are useful for control of certain devices in a powertrain of the motor vehicle.

### Description of the Preferred Embodiment

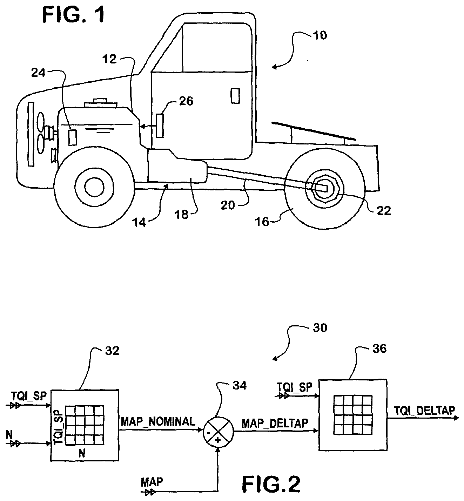

Figure 1 shows a truck 10 representing a motor vehicle that embodies principles of the invention. Truck 10 comprises an internal combustion engine 12, a diesel engine for example, and a powertrain 14 through which engine 12 delivers torque to driven wheels 16 that propel the truck. Powertrain 14 includes a transmission 18, a driveshaft, 20, and an axle 22 to which wheels 16 are fastened.

Engine 12 includes a turbocharger 24 that is operated by engine exhaust gases to create boost in one or more intake manifolds of engine 12, the number of manifolds depending on the particular engine. While the invention has been found especially useful in certain engines having certain two-stage turbochargers, the invention is considered potentially beneficial in turbocharged engines generally.

Engine 12 is part of an engine system that further includes a processor-based control system 26 that processes data from various sources to develop various control data for controlling various aspects of engine and powertrain operation. The data processed by may originate at external sources, such as various sensors and/or be generated internally. Examples of data processed and/or developed by processing may include, for example, engine speed, intake manifold pressure (i.e., boost), exhaust manifold pressure, fuel injection pressure, fueling quantity and timing, mass airflow, and accelerator pedal position. The results of such processing yield data values for control parameters.

Engine brake torque is one of those control parameters. One use of engine brake torque data is for control of automatic transmission shifting. As mentioned earlier, it has been observed that transmission shift quality may be affected by the nature of certain turbochargers in certain engines, such as certain two-stage turbochargers, and it is from that observation that the inventors have created a novel and improved strategy for calculating engine brake torque.

That strategy appears in the diagram 30 of Figure 2 which shows a boost map 32, an algebraic summing function 34, and a calculated torque map 36. A parameter N represents engine speed and a parameter TQI_SP represents estimated torque. A parameter MAP_NORMAL represents a data value selected from boost map 32, and a parameter MAP represents actual intake manifold pressure, boost in the case of a turbocharged engine like engine 12. A parameter TQI_DELTAP represents a data value for calculated torque selected from torque map 36.

A data value for estimated torque TQI_SP results from execution of a torque estimation algorithm by control system 26. It has been discovered that during certain engine transients, such as accelerations under load, even a sufficiently high iteration rate for calculating estimated torque does not provide the best accuracy in tracking true torque being delivered. The inventors have recognized that characteristics of certain turbochargers have a significant influence on the ability of the estimated torque to accurately track true torque, and consequently have improved the accuracy of torque calculation during transients by incorporating the strategy of diagram 30 into the torque calculation strategy in control system 26.

As the strategy iterates during engine acceleration under load, data values for engine speed N and estimated torque TQI_SP are used to select from boost map 32 a current data value for parameter MAP_NOMINAL, and the selected value is then processed by function 34 with the current data value for engine speed N to yield a data value for a parameter MAP_DELTAP representing the difference between the two.

Map 32 is populated with data values for boost, each of which represents boost that would prevail during steady state engine operation at a respective speed with the engine developing a respective torque. Each data value for boost in the map is correlated with a respective set of data values for engine speed and torque. During engine acceleration under load, the data value for estimated torque has been found to possess some inaccuracy due to some disparity between the data value for actual boost and the data value selected from the map. Hence, the purpose of function 34 is to measure the extent of the disparity in boost. The strategy then uses the calculated boost disparity and the data value for estimated torque to select from torque map 36 a data value for calculated torque that more accurately reflects torque being developed by the engine during acceleration than does the estimated torque.

Map 36 is populated with calculated torque data values, each of which is correlated with a respective set of data values for boost disparity and torque. The data value selected from map 36 (parameter TQI_DELTAP) is called "calculated" torque as distinguished from "estimated" torque (parameter TQI_SP). It is TQI_DELTAP that is preferably used for control purposes such as controlling shifting of transmission 18 when the transmission is one whose shifting is controlled using brake engine torque data. In this instance it would be understood that TQI_DELTAP represents engine brake torque.

While a presently preferred embodiment of the invention has been illustrated and described, it should be appreciated that principles of the invention apply to all embodiments falling within the scope of the following claims.

## Claims

1. A method for calculating torque being produced by a turbocharged internal combustion engine (12) during acceleration under load, the method comprising: during acceleration under load,
1) processing a data value (MAP) for actual boost and a data value (MAP_NOMINAL) for boost selected from a boost map (32) that contains data values for boost, each of which represents boost that would prevail during steady state engine operation at a respective speed with the engine developing a respective torque and each of which is correlated with a respective set of data values for engine speed and torque, the selection being made using a data value (N) for engine speed and a data value (TQI_SP) for estimated torque that possesses some inaccuracy due to some disparity between the data value (MAP) for actual boost and the data value (MAP_NOMINAL) selected from the map (32),
to yield a boost disparity data value (MAP_DELTAP) representing disparity between the data value (MAP) for actual boost and the data value (MAP_NOMINAL) for boost selected from the map (32), and
2) processing the boost disparity data value (MAP_DELTAP) and the data value (TQI_SP) for estimated torque to select from a torque map (36) that contains data values (TQI_DELTAP) for calculated torque, each of which is correlated with a respective set of data values (MAP_DELTAP) for boost disparity and estimated torque (TQI_SP), a data value (TQI_DELTAP) for calculated torque correlated with the boost disparity data value (MAP_DELTAP) and the data value (TQI_SP) for estimated torque.

2. A method as set forth in Claim 1 wherein the step of processing a data value (MAP) for actual boost and a data value (MAP_NOMINAL) for boost selected from the boost map (32) comprises subtracting one from the other and using the difference as the boost disparity data value (MAP_DELTAP).

3. A method as set forth in Claim 1 including the further step of using the data value (TQI_DELTAP) for calculated torque from the torque map (36) in processing that controls a function associated with operation of a device in a motor vehicle (10) powertrain (14) that is powered by the engine (12).

4. A method as set forth in Claim 3 wherein the further step comprises using the data value (TQI_DELTAP) for calculated torque from the torque map (36) in processing that controls shifting of a transmission (18) through which the engine (12) transmits torque to driven wheels (16).

5. A processing system for use in association with a turbocharged internal combustion engine (12), the processing system comprising:
a processor for executing data processing algorithms, one of which selects data values from first (32) and second (36) maps;
the first map (32) containing data values (MAP_NOMINAL) for boost each of which is developed during steady state engine (12) operation at a respective speed while the engine (12) is developing a respective torque and each of which is arranged in the map (32) in correlation with a respective set of data values for engine speed and torque; and the second map (36) containing data values (TQI_DELTAP) providing for correction of a data value (TQI_SP) for estimated torque that possesses some inaccuracy due to some disparity between a data value (MAP) for actual boost and a data value (MAP_NORMAL) for boost selected from the first map (32), each data value in the second map (36) being arranged in correlation with a respective set of data values for estimated torque (TQI_SP) and for disparity (MAP_NORMAL) between the data value (MAP) for actual boost and the data value (MAP_NORMAL) from the first map (32);
wherein when the processor executes the one algorithm, a data value from the first map (32) correlated with data values for engine speed (N) and estimated torque (TQI_SP) is selected, a data value for disparity between the data value (MAP) for actual boost and the data value (MAP_NORMAL) from the first map (32) is calculated, and a data value (TQI_DELTAP) from the second map (36) correlated with the data values for estimated torque (TQI_SP) and the disparity (MAP_DELTAP) between the data value (MAP) for actual boost and the data value (MAP_NORMAL) from the first map (32) is selected.

6. A processing system as set forth in Claim 5 wherein the data values in the second map (36) comprise data values (TQI_DELTAP) for calculated torque.

7. A processing system as set forth in Claim 6 wherein the data values in the second map (36) comprise data values for calculated brake torque.

8. An internal combustion engine system comprising:
a turbocharger (24) for turbocharging the engine (12);
a data source providing a data value (MAP) for actual boost; and
a processing system of any one of the claims 5 to 7, executing a torque calculation algorithm that when executed as the engine (12) accelerates under load, is arranged to select the data value (TQI_DELTAP) from the second map (36) as a data value for calculated torque.

9. An engine as set forth in Claim 8 wherein the torque calculation algorithm, when executed as the engine (12) accelerates under load, is arranged to calculate the data value (MAP _DELTAP) for boost disparity as the difference between the data value for actual boost and the data value (MAP) for boost selected from the first map (32).

10. An engine as set forth in Claim 8 including a motor vehicle (10) powertrain (14) that is powered by the engine (12) and comprises a device that is controlled by the data value for calculated torque from the second map (36).

11. An engine as set forth in Claim 10 wherein the device comprises a transmission (18) through which the engine (12) transmits torque to driven wheels (16) and whose shifting is controlled by the data value (TQI_DELTAP) for calculated torque from the second map (36).

## Patentansprüche

1. Verfahren zum Berechnen eines Drehmoments, das durch eine aufgeladene Verbrennungskraftmaschine (12) während der Beschleunigung unter Last erzeugt wird, wobei das Verfahren aufweist:
während der Beschleunigung unter Last,
1) Verarbeiten eines Datenwerts (MAP) für einen tatsächlichen Schub und eines Datenwerts (MAP_NOMINAL) für einen Schub, der aus einem Schubkennfeld (32) ausgewählt wird, das Datenwerte für den Schub enthält, von denen jeder einen Schub darstellt, der während eines konstanten Maschinenbetriebs bei einer entsprechenden Drehzahl vorherrscht, wobei die Maschine ein entsprechendes Drehmoment entwickelt, und von denen jeder mit einem entsprechenden Satz Datenwerte für die Maschinendrehzahl und das Drehmoment korreliert ist, wobei die Auswahl unter Verwendung eines Datenwerts (N) für die Maschinendrehzahl und eines Datenwerts (TQI_SP) für das geschätzte Drehmoment, der aufgrund einiger Ungleichheit zwischen dem Datenwert (MAP) für den tatsächlichen Schub und dem Datenwert (MAP_NOMINAL), der aus dem Kennfeld (32) ausgewählt wird, eine gewisse Ungenauigkeit aufweist, getroffen wird, um einen Schubungleichheitsdatenwert (MAP_DELTAP) zu erhalten, der eine Ungleichheit zwischen dem Datenwert (MAP) für den tatsächlichen Schub und dem Datenwert (MAP_NOMINAL) für den Schub, der aus dem Kennfeld (32) ausgewählt ist, darstellt, und
2) Verarbeiten des Schubungleichheitsdatenwerts (MAP_DELTAP) und des Datenwerts (TQI_SP) für das geschätzte Drehmoment, um aus einem Drehmomentkennfeld (36) auszuwählen, das Datenwerte (TQI_DELTAP) für berechnetes Drehmoment enthält, wobei jeder mit einem entsprechenden Satz Datenwerte (MAP_DELTAP) für die Schubungleichheit und das geschätzte Drehmoment (TQI_SP), einem Datenwert (TQI_DELTAP) für das berechnete Drehmoment, der mit dem Schubungleichheitsdatenwert (MAP_DELTAP) korreliert ist, und dem Datenwert (TQI_SP) für das geschätzte Drehmoment korreliert ist.

2. Verfahren nach Anspruch 1, wobei der Schritt des Verarbeitens eines Datenwerts (MAP) für den tatsächlichen Schub und eines Datenwerts (MAP_NOMINAL) für den aus dem Schubkennfeld (32) ausgewählten Schub ein Subtrahieren des einen von dem anderen und ein Verwenden der Differenz als den Schubungleichheitsdatenwert (MAP_DELTAP) aufweist.

3. Verfahren nach Anspruch 1, aufweisend den weiteren Schritt des Verwendens des Datenwerts (TQI_DELTAP) für das berechnete Drehmoment aus dem Drehmomentkennfeld (36) beim Verarbeiten, das eine Funktion steuert, die dem Betrieb einer Vorrichtung in einem Antriebsstrang eines Kraftfahrzeug (10), der durch die Maschine (12) angetrieben wird, zugeordnet ist.

4. Verfahren nach Anspruch 3, wobei der weitere Schritt ein Verwenden des Datenwerts (TQI_DELTAP) für das berechnete Drehmoment aus dem Drehmomentkennfeld (36) beim Verarbeiten aufweist, das ein Schalten eines Getriebes (18) steuert, durch das die Maschine (12) Drehmoment an die angetriebenen Räder (16) überträgt.

5. Verarbeitungssystem zur Verwendung zusammen mit einer aufgeladenen Verbrennungskraftmaschine (12), wobei das Verarbeitungssystem aufweist:
einen Prozessor zum Ausführen von Datenverarbeitungsalgorithmen, von denen einer Datenwerte aus ersten (32) und zweiten (36) Kennfeldern auswählt;
wobei das erste Kennfeld (32) Datenwerte (MAP_NOMINAL) für den Schub enthält, von denen jeder während des konstanten Betriebs der Maschine (12) bei einer entsprechenden Drehzahl entwickelt wird, während die Maschine (12) ein entsprechendes Drehmoment entwickelt und jeder der Werte in dem Kennfeld (32) in Korrelation mit einem entsprechenden Satz Datenwerte für die Maschinendrehzahl und das Drehmoment angeordnet ist; und
wobei das zweite Kennfeld (36) Datenwerte (TQI_DELTAP) enthält, die eine Korrektur eines Datenwerts (TQI_SP) für das geschätzte Drehmoment, der aufgrund einiger Ungleichheit zwischen dem Datenwert (MAP) für den tatsächlichen Schub und dem Datenwert (MAP_NORMAL) für den Schub, der aus dem ersten Kennfeld (32) ausgewählt wird, eine gewisse Ungenauigkeit aufweist, ermöglichen, wobei jeder Datenwert in dem zweiten Kennfeld (36) in Korrelation mit einem entsprechenden Satz Datenwerte für das geschätzte Drehmoment (TQI_SP) und für die Ungleichheit (MAP_NORMAL) zwischen dem Datenwert (MAP) für den tatsächlichen Schub und den Datenwert (MAP_NORMAL) von dem ersten Kennfeld (32) angeordnet ist;
wobei, wenn der Prozessor den einen Algorithmus ausführt, ein Datenwert von dem ersten Kennfeld (32), der mit Datenwerten für die Maschinendrehzahl (N) und das geschätzte Drehmoment (TQI_SP) korreliert ist, ausgewählt wird, ein Datenwert für die Ungleichheit zwischen dem Datenwert (MAP) für den tatsächlichen Schub und dem Datenwert (MAP_NORMAL) von dem ersten Kennfeld (32) berechnet wird, und ein Datenwert (TQI_DELTAP) von dem zweiten Kennfeld (36), der mit den Datenwerten für das geschätzte Drehmoment (TQI_SP) und die Ungleichheit (MAP_DELTAP) zwischen dem Datenwert (MAP) für den tatsächlichen Schub und dem Datenwert (MAP_NORMAL) von dem ersten Kennfeld (32) korreliert ist, ausgewählt wird.

6. Verarbeitungssystem nach Anspruch 5, wobei die Datenwerte in dem zweiten Kennfeld (36) Datenwerte (TQI_DELTAP) für das berechnete Drehmoment aufweisen.

7. Verarbeitungssystem nach Anspruch 6, wobei die Datenwerte in dem zweiten Kennfeld (36) Datenwerte für ein berechnetes Bremsmoment aufweisen.

8. Verbrennungskraftmaschinensystem, aufweisend:
einen Turbolader (24) zum Aufladen der Maschine (12);
eine Datenquelle, die einen Datenwert (MAP) für einen tatsächlichen Schub zur Verfügung stellt; und
ein Verarbeitungssystem nach einem der Ansprüche 5 bis 7, das einen Drehmomentberechnungsalgorithmus ausführt, der, wenn er ausgeführt wird, während die Maschine (12) unter Last beschleunigt, so angeordnet ist, dass er den Datenwert (TQI_DELTAP) von dem zweiten Kennfeld (36) als einen Datenwert für ein berechnetes Drehmoment auswählt.

9. Maschine nach Anspruch 8, wobei der Drehmomentberechnungsalgorithmus, wenn er ausgeführt wird, während die Maschine (12) unter Last beschleunigt, so angeordnet ist, dass er den Datenwert (MAP_DELTAP) für die Schubungleichheit als die Differenz zwischen dem Datenwert für den tatsächlichen Schub und dem Datenwert (MAP) für den Schub, der aus dem ersten Kennfeld (32) ausgewählt wird, berechnet.

10. Maschine nach Anspruch 8, aufweisend einen Antriebsstrang (14) für ein Kraftfahrzeug (10), der durch die Maschine (12) angetrieben wird und eine Vorrichtung aufweist, die durch den Datenwert für das berechnete Drehmoment von dem zweiten Kennfeld (36) gesteuert wird.

11. Maschine nach Anspruch 10, wobei die Vorrichtung ein Getriebe (18) aufweist, durch das die Maschine (12) Drehmoment an die angetriebenen Räder (16) überträgt und dessen Schalten durch den Datenwert (TQI_DELTAP) für ein berechnetes Drehmoment von dem zweiten Kennfeld (36) gesteuert wird.

## Revendications

1. Procédé de calcul d'un couple produit par un moteur (12) à combustion interne à turbocompresseur pendant une accélération sous charge, le procédé comprenant :
pendant une accélération sous charge,
1) traiter une valeur (MAP) de données de suralimentation instantanée et une valeur (MAP_NOMINAL) de données de suralimentation sélectionnée dans une carte (32) de suralimentation, qui contient des valeurs de données de suralimentation, chacune d'entre elles représente une suralimentation, qui prévaudrait pendant un fonctionnement du moteur en régime permanent à une vitesse respective, alors que le moteur développe un couple respectif, et chacune d'entre elles étant corrélée à un jeu respectif de valeurs de données de vitesse et de couple du moteur, la sélection étant faite en utilisant une valeur (N) de données de la vitesse du moteur et une valeur (TQI_SP) de données d'un couple estimé, qui a quelque imprécision due à quelque disparité entre la valeur (MAP) de données de la suralimentation instantanée et la valeur (MAP_NOMINAL) de données sélectionnée dans la carte (32),
pour fournir une valeur (MAP_DELTAP) de données de disparité de suralimentation, représentant une disparité entre la valeur (MAP) de données de la suralimentation instantanée et la valeur (MAP_NOMINAL) de données d'une suralimentation sélectionnée dans la carte (32) et
2) traiter la valeur (MAP_DELTAP) de données de disparité de suralimentation et la valeur (TQI_SP) de données du couple estimé, pour sélectionner une carte (36) de couple, qui contient des valeurs (TQI_DELTAP) de données du couple calculé, chacune d'entre elles étant corrélée à un jeu respectif de valeurs (MAP_DELTAP) de données de la disparité de suralimentation et de couple (TQI_SP) estimé, une valeur (TQI_DELTAP) de données du couple calculé corrélée à la valeur (MAP_DELTAP) de données de disparité de suralimentation et à la valeur (TQI_SP) de données du couple estimé.

2. Procédé suivant la revendication 1, dans lequel le stade de traitement d'une valeur (MAP) de données de la suralimentation instantanée et une valeur (MAP_NOMINAL) de la suralimentation sélectionnée dans la carte (32) de suralimentation comprend les soustraire l'une de l'autre et utiliser la différence comme valeur (MAP_DELTAP) de données de disparité de suralimentation.

3. Procédé suivant la revendication 1, comprenant le stade supplémentaire d'utiliser la valeur (TQI_DELTAP) de données du couple calculé dans la carte (36) de couple dans un traitement, qui commande une fonction associée au fonctionnement d'un dispositif de la transmission (14) de véhicule (10) à moteur, qui est alimentée par le moteur (12).

4. Procédé suivant la revendication, dans lequel le stade supplémentaire comprend utiliser la valeur (TQI_DELTAP) de données du couple calculé dans la carte (36) de couple dans un traitement, qui commande un changement d'une transmission (18) par laquelle le moteur (12) transmet un couple à des roues (16) entraînées.

5. Système de traitement à utiliser en association avec un moteur (12) à combustion interne à turbocompresseur, le système de traitement comprenant :
un processeur pour exécuter des algorithmes de traitement de données, l'un d'entre eux sélectionnant des valeurs de données dans une première (32) et une deuxième cartes (36);
la première carte (32), contenant des valeurs (MAP_NOMINAL) de données de suralimentation, chacune d'entre elles étant développée pendant un fonctionnement du moteur (12) en régime permanent à une vitesse respective, alors que le moteur (12) développe un couple respectif, et chacune d'entre elles étant mise dans la carte (32) en corrélation avec un jeu respectif de valeurs de données de vitesse et de couple du moteur et
la deuxième carte (36) contenant des valeurs (TQI_DELTAP) de données, fournissant une correction d'une valeur (TQI_SP) de données du couple estimé, qui a quelque imprécision due à quelque disparité entre une valeur (MAP) de données de la suralimentation instantanée et une valeur (MAP_NORMAL) de données de la suralimentation sélectionnée dans la première carte (32), chaque valeur de données de la deuxième carte (36) étant mise en corrélation avec un jeu respectif de valeurs de données du couple (TQI-SP) estimées et de la disparité (MAP_NORMAL) entre la valeur (MAP) de données de la suralimentation instantanée et la valeur (MAP_NORMAL) de données dans la première carte (32);
dans lequel, lorsque le processeur exécute le un algorithme, on sélectionne une valeur de données dans la première carte (32) corrélée à des valeurs de données de vitesse (N) de moteur et de couple (TQI_SP) estimé, on calcule une valeur de données de la disparité entre la valeur (MAP) de données de la suralimentation instantanée et la valeur (MAP_NORMAL) de données dans la première carte (32) et on sélectionne une valeur (TQI_DELTAP) de données dans la deuxième carte (36) corrélée aux valeurs de données du couple (TQI_SP) estimé et à la disparité (MAP_DELTAP) entre la valeur (MAP) de donnée de la suralimentation instantanée et la valeur (MAP_NORMAL) de données dans la première carte (32).

6. Système de traitement suivant la revendication 5, dans lequel les valeurs de données dans la deuxième carte (36) comprennent des valeurs (TQI_DELTAP) de données du couple calculé.

7. Système de traitement suivant la revendication 6, dans lequel les valeurs de données dans la deuxième carte (36) comprennent des valeurs de données d'un couple de freinage calculé.

8. Système de moteur à combustion interne, comprenant :
un turbocompresseur (24) pour suralimenter le moteur (12) ;
une source de données fournissant une valeur (MAP) de données de suralimentation instantanée et
un système de traitement suivant l'une quelconque des revendications 5 à 7, exécutant un algorithme de calcul de couple, qui, lorsqu'il est exécuté, alors que le moteur (12) accélère sous charge, est agencé pour sélectionner la valeur (TQI_DELTAP) de données dans la deuxième carte (36), comme valeur de données du couple calculé.

9. Moteur suivant la revendication 8, dans lequel l'algorithme de calcul de couple, lorsqu'il est exécuté, alors que le moteur (12) accélère sous charge, est agencé pour calculer la valeur (MAP_DELTAP) de données de la disparité de suralimentation, sous la forme de la différence entre la valeur de données de la suralimentation instantanée et la valeur (MAP) de données de la suralimentation sélectionnée dans la première carte (32).

10. Moteur suivant la revendication 8, comprenant une transmission (14) de véhicule (10) à moteur, qui est alimenté par le moteur (12) et comprend un dispositif, qui est commandé par la valeur de données du couple calculé dans la deuxième carte (36).

11. Moteur suivant la revendication 10, dans lequel le dispositif comprend une transmission (18), par laquelle le moteur (12) transmet à un couple à des roues (16) entraînées et dont le changement est commandé par la valeur (TQI_DELTAP) de données du couple calculé dans la deuxième carte (36).
